# EUROPEAN PATENT APPLICATION

(11) **EP 3 940 666 A1**
(43) Date of publication of application: **19.01.2022**
(21) Application number: 20791246.0
(22) Date of filing: 19.03.2020
(51) Int. Cl.: G08G 1/01, G06K 9/00

(54) **DIGITAL RECONSTRUCTION METHOD, APPARATUS, AND SYSTEM FOR TRAFFIC ROAD**

(30) Priority: 15.04.2019 WO PCT/CN2019/082768
(71) Applicant: Huawei Technologies Co., Ltd., Shenzhen, Guangdong 518129 (CN)
(72) Inventor: LI, Jinbo, Shenzhen, Guangdong 518129 (CN); SHEN, Jianhui, Shenzhen, Guangdong 518129 (CN); HUA, Wenjian, Shenzhen, Guangdong 518129 (CN); LI, Yang, Shenzhen, Guangdong 518129 (CN); LENG, Jinan, Shenzhen, Guangdong 518129 (CN); CHANG, Sheng, Shenzhen, Guangdong 518129 (CN)
(74) Representative: Kreuz, Georg Maria
(86) International application number: PCT/CN2020/080277
(87) International publication number: WO 2020/211593

(57) **Abstract**

This application discloses a digital reconstruction method for a traffic road, and relates to the field of smart transportation. The method includes: obtaining video data shot by a camera disposed on the traffic road, where the video data records a plurality of targets on the traffic road; determining a running track of each target on the traffic road based on the video data; and establishing a digital view of the traffic road. The digital view includes a plurality of models. Each model represents each target on the traffic road. Each model in the digital view runs based on a running track of a target that corresponds to the model and that is on the traffic road. The established digital view of the traffic road may conveniently and truly reflect a running status of the traffic road, and the digital view of the traffic road does not need to consume a large number of memory resources and communication resources.

## Description

### TECHNICAL FIELD

This application relates to the field of smart transportation, and in particular, to a digital reconstruction method for a traffic road, an apparatus, and a system.

### BACKGROUND

As an important part of a smart city, smart transportation plays a significant role in improving operational efficiency, service level, and security assurance of urban transportation. A traffic road is an area in which traffic accidents and traffic exceptions are frequent. Traffic data obtaining and traffic status monitoring of the traffic road are important for urban transportation management. Data is a basis of the smart transportation. Automatic analysis, research, and judgment of various pieces of traffic information are based on massive data. Currently, a large number of raw data collection devices, such as a surveillance camera, a radar, and a magnetic induction coil, are deployed on the traffic road, to collect massive data resources for road transportation. Traffic road observation and research can provide a better understanding of speeds, tracks, and flow directions of a vehicle, a pedestrian, and a non-motor vehicle on a road, and are of great significance for traffic flow monitoring, congestion relief, and traffic violation monitoring.

In the prior art, the traffic road is mainly monitored by observing video data shot by cameras. The video data occupies a large amount of memory, and has low transmission efficiency and poor observability.

### SUMMARY

This application provides a digital reconstruction method for a traffic road, and a system. A traffic road in a physical world may be digitally presented through the method. A running status of the traffic road may be efficiently monitored through the method provided in this application.

According to a first aspect, this application provides a digital reconstruction method for a traffic road. The method includes: obtaining video data shot by a camera disposed on the traffic road, where the video data records a plurality of targets on the traffic road; determining a running track of each target on the traffic road based on the video data; and establishing a digital view of the traffic road. The digital view includes a plurality of models. Each model represents each target on the traffic road. Each model in the digital view runs based on a running track of a target that corresponds to the model and that is on the traffic road.

In the foregoing method, the digital view of the traffic road is constructed to help a user (for example, a vehicle owner or a staff member of a traffic management department) conveniently and truly learn a running status of the traffic road. Further, compared with raw video data, the constructed digital view occupies less memory and has higher transmission efficiency, so that the digital view may be easily stored and transmitted.

It should be understood that the target on the traffic road may be a moving object such as a vehicle, a pedestrian, or an animal, or a temporarily stationary moving object.

In a possible implementation of the first aspect, the method further includes: determining type information of each target based on the video data. Correspondingly, different models in the digital view correspond to different types of targets. The different models are used to represent the different types of targets, so that an actual status of the traffic road can be more vividly reflected, to help the user make a judgment and a decision based on the different models displayed in the digital view.

In a possible implementation of the first aspect, there is a plurality of cameras disposed on the traffic road, and view angles of video data collected by different cameras of the plurality of cameras are different. In the foregoing method, the traffic road can be more comprehensively and accurately displayed by combining video data that is of the traffic road and that is shot by the plurality of cameras from different view angles, to avoid an incorrect judgment made by the user due to blocking, a view angle deviation, or the like.

In a possible implementation of the first aspect, the method further includes: displaying the digital view or sending the digital view to a display apparatus. A view angle of the displayed digital view is the same as or different from a view angle of the video data. The digital view is displayed, so that the user can more conveniently obtain information of the traffic road based on the digital view.

In a possible implementation of the first aspect, the method further includes: obtaining attribute information of each target. The digital view further includes the attribute information of each target. The attribute information may further describe and explain the target of the traffic road, so that the user can understand the target in more detail; and an amount of information included in the digital view is increased, so that the digital view may be applied to more scenarios.

In a possible implementation of the first aspect, the target on the traffic road may be a vehicle, and attribute information of the target includes one or more pieces of the following information: a color of the vehicle, a license plate number of the vehicle, a model of the vehicle, a running speed of the vehicle, vehicle owner identity information, and vehicle registration and maintenance information.

In a possible implementation of the first aspect, the video data includes video data at a first moment. The determining a running track of each target on the traffic road based on the video data includes: determining geographic coordinates of each target on the traffic road at the first moment based on the video data at the first moment, and determining the running track of each target on the traffic road based on the geographic coordinates of each target on the traffic road at the first moment and geographic coordinates of each target on the traffic road before the first moment.

In a possible implementation of the first aspect, the method further includes: determining a posture of each target based on the running track of each target on the traffic road. Each model in the digital view runs based on the running track and a posture of the target, on the traffic road, that corresponds to the model.

In the foregoing method, the digital view more truly shows running of each target on the traffic road, so that the user may intuitively obtain a posture of a target from the digital view at a certain moment.

In a possible implementation of the first aspect, the method further includes: recognizing a background object on the traffic road based on the video data. The digital view further includes a model representing the background object on the traffic road. The background object on the traffic road is modeled and presented, so that the user can more clearly understand a surrounding environment and a background status of the traffic road through the digital view. This helps the user make a judgment and a decision.

In a possible implementation of the first aspect, the method further includes: obtaining a map of the traffic road. The establishing a digital view of the traffic road includes: obtaining a model corresponding to each target, and mapping the model corresponding to each target to the map of the traffic road based on the running track of each target on the traffic road, to obtain the digital view of the traffic road.

It should be understood that, in some possible implementations, the map may be a real-view map including a background of the traffic road.

In a possible implementation of the first aspect, the method further includes: obtaining radar data, where the radar data records driving information of the target on the traffic road; and determining the running track of each target on the traffic road based on the radar data and the video data. A running track of the target on the traffic road is determined by combining the radar data and the video data, so that accuracy of the determined running track of the target can be improved.

According to a second aspect, this application further provides a method for providing a digital view of a traffic road. The method includes: presenting, to a user, a digital view of the traffic road from a first view angle, where the digital view includes a plurality of models, each model represents each target on the traffic road, each model runs based on a running track of a target that corresponds to the model and that is on the traffic road, and a running track of each target on the traffic road is obtained through calculation based on video data shot by a camera on the traffic road; receiving view angle adjustment information sent by the user, where the view angle adjustment information is used to request to observe the digital view from a second view angle; and presenting, to the user based on the view angle adjustment information, the digital view from the second view angle.

The digital view may present, to the user based on the view angle adjustment information of the user, a running status of the traffic road from different view angles. This increases flexibility and may provide more information to the user.

In a possible implementation of the second aspect, different models in the digital view correspond to different types of targets.

In a possible implementation of the second aspect, the method further includes: presenting attribute information of a target to the user. The attribute information of the target is associated with a model, corresponding to the target, in the digital view.

In a possible implementation of the second aspect, the presenting attribute information of a target to the user specifically includes: receiving instruction information of the user; and displaying, based on the instruction information of the user, the attribute information of the target in the digital view of the traffic road from the first view angle.

In a possible implementation of the second aspect, the method further includes: presenting, to the user, running tracks of the plurality of models in the digital view.

In a possible implementation of the second aspect, the digital view further includes a background on the traffic road, and the background includes a marking line on the traffic road and an object around the traffic road.

In a possible implementation of the second aspect, the traffic road includes a plurality of intersections, and the digital view of the traffic road coherently presents each intersection and a model corresponding to a target running on each intersection.

According to a third aspect, this application further provides a graphical user interface system. The system includes: a digital view window, configured to display a digital view of the traffic road, where the digital view includes a plurality of models, each model represents each target on the traffic road, and each model in the digital view runs based on a running track of a target that corresponds to the model and that is on the traffic road; and a management window, including a button selectable by a user, where the button selectable by the user includes a view angle adjustment button. After the view angle adjustment button is selected by the user, the digital view window displays a digital view of the traffic road from a view angle corresponding to the view angle adjustment button.

In a possible implementation of the third aspect, different models in the digital view correspond to different types of targets.

In a possible implementation of the third aspect, the digital view further includes attribute information of a target. The attribute information of the target is associated with a model, corresponding to the target, in the digital view.

In a possible implementation of the third aspect, the digital view further includes a running track of each model, and the running track of each model is obtained based on a running track of each target on the traffic road.

In a possible implementation of the third aspect, the button selectable by the user further includes a track display button. After the track display button is selected by the user, the digital view window displays the running track of each model.

In a possible implementation of the third aspect, the running track of each model includes a running path of each model at a future moment.

In a possible implementation of the third aspect, the digital view further includes a background on the traffic road, and the background includes a marking line on the traffic road and an object around the traffic road.

In a possible implementation of the third aspect, the traffic road includes a plurality of intersections, and the digital view of the traffic road coherently presents each intersection and a model corresponding to a target running on each intersection.

According to a fourth aspect, this application further provides an apparatus. The apparatus includes: a data processing module, configured to obtain video data, where the video data is shot by a camera disposed on a traffic road, and the video data records a plurality of targets on the traffic road; a data analysis module, configured to determine a running track of each target on the traffic road based on the video data; and a digital modeling module, configured to establish a digital view of the traffic road. The digital view includes a plurality of models. Each model represents each target on the traffic road. Each model in the digital view runs based on a running track of a target that corresponds to the model and that is on the traffic road.

In a possible implementation of the fourth aspect, the data processing module is further configured to determine type information of each target based on the video data. Correspondingly, different models in the digital view correspond to different types of targets.

In a possible implementation of the fourth aspect, there is a plurality of cameras disposed on the traffic road, and view angles of video data collected by different cameras of the plurality of cameras are different.

In a possible implementation of the fourth aspect, the digital modeling module is further configured to display the digital view or send the digital view to a display apparatus. A view angle of the displayed digital view is the same as or different from a view angle of the video data.

In a possible implementation of the fourth aspect, the digital processing module is further configured to obtain attribute information of each target. The digital view further includes the attribute information of each target.

In a possible implementation of the fourth aspect, the target on the traffic road may be a vehicle, and attribute information of the target includes one or more pieces of the following information: a color of the vehicle, a license plate number of the vehicle, a model of the vehicle, a running speed of the vehicle, vehicle owner identity information, and vehicle registration and maintenance information.

In a possible implementation of the fourth aspect, the video data includes video data at a first moment. The data analysis module is specifically configured to: determine geographic coordinates of each target on the traffic road at the first moment based on the video data at the first moment, and determine the running track of each target on the traffic road based on the geographic coordinates of each target on the traffic road at the first moment and geographic coordinates of each target on the traffic road before the first moment.

In a possible implementation of the fourth aspect, the data processing module is further configured to determine a posture of each target based on the running track of each target on the traffic road. Each model in the digital view runs based on the running track and a posture of the target, on the traffic road, that corresponds to the model.

In a possible implementation of the fourth aspect, the data processing module is further configured to recognize a background object on the traffic road based on the video data. The digital view further includes a model representing the background object on the traffic road.

In a possible implementation of the fourth aspect, the digital modeling module is specifically configured to: obtain a map of the traffic road; obtain a model corresponding to each target; and map the model corresponding to each target to the map of the traffic road based on the running track of each target on the traffic road, to obtain the digital view of the traffic road.

According to a fifth aspect, this application further provides a display device. The display device includes a receiving module and a display module. The display module is configured to present, to a user, a digital view of the traffic road from a first view angle. The digital view includes a plurality of models. Each model represents each target on the traffic road. Each model runs based on a running track of a target that corresponds to the model and that is on the traffic road. A running track of each target on the traffic road is obtained through calculation based on video data shot by a camera on the traffic road. The receiving module is configured to receive view angle adjustment information sent by the user. The view angle adjustment information is used to request to observe the digital view from a second view angle. The display module is further configured to present, to the user based on the view angle adjustment information, the digital view from the second view angle.

It should be understood that the display device may be a terminal device, for example, a mobile phone, a tablet computer, a vehicle-mounted computer, or a portable computer, or may be a visualization device located on an edge side or in a data center.

According to a sixth aspect, this application further provides a computing device. The computing device includes a processor and a memory. The memory stores a computer instruction. The processor executes the computer instruction, to enable the computing device perform the method in the first aspect or any possible implementation of the first aspect. It should be understood that the computing device may be a server, a vehicle-mounted computing device, a vehicle, or the like.

According to a seventh aspect, this application further provides a computer-readable storage medium. The computer-readable storage medium stores computer program code. When the computer program code is executed by a computing device, the computing device performs the method in the first aspect or any possible implementation of the first aspect, or performs the method in the second aspect or any possible implementations of the second aspect. The computer-readable storage medium includes but is not limited to a volatile memory such as a random access memory, or a non-volatile memory such as a flash memory, a hard disk drive (English: hard disk drive, HDD for short), or a solid-state drive (English: solid state drive, SSD for short).

According to an eighth aspect, this application further provides a computer program product. The computer program product includes computer program code. When the computer program code is executed by a computing device, the computing device performs the method provided in the first aspect or any possible implementation of the first aspect, or performs the method provided in the second aspect or any possible implementation of the second aspect. The computer program product may be a software installation package. When the method provided in the first aspect or any possible implementation of the first aspect needs to be used, or the method provided in the second aspect or any possible implementation of the second aspect needs to be used, the computer program product may be downloaded and executed on a computing device.

According to a ninth aspect, this application further provides a system. The system includes the display device according to the fifth aspect and the computing device according to the sixth aspect.

### BRIEF DESCRIPTION OF DRAWINGS

To describe the technical solutions in the embodiments of this application more clearly, the following briefly describes the accompanying drawings for the embodiments.
FIG. 1 is a schematic diagram of a system architecture according to an embodiment of this application;
FIG. 2 is a schematic diagram of another system architecture according to an embodiment of this application;
FIG. 3 is a schematic structural diagram of a digital reconstruction system 100 according to an embodiment of this application;
FIG. 4 is a schematic diagram of deployment of a digital reconstruction system 100 according to an embodiment of this application;
FIG. 5 is a schematic flowchart of a digital reconstruction method for a traffic road according to an embodiment of this application;
FIG. 6 is a schematic flowchart of target detection and attribute detection according to an embodiment of this application;
FIG. 7 is a schematic flowchart of target locating according to an embodiment of this application;
FIG. 8 is a schematic flowchart of target tracking according to an embodiment of this application;
FIG. 9 is a schematic flowchart of digital modeling according to an embodiment of this application;
FIG. 10 shows graphical user interfaces of digital views from different view angles according to an embodiment of this application;
FIG. 11 shows a graphical user interface of another digital view according to an embodiment of this application;
FIG. 12 is a schematic structural diagram of an apparatus 800 according to an embodiment of this application;
FIG. 13 is a schematic structural diagram of a computing device 900 according to an embodiment of this application; and
FIG. 14 is a schematic structural diagram of a computing device system according to an embodiment of this application.

### DESCRIPTION OF EMBODIMENTS

The following describes in detail the solutions in the embodiments provided in this application with reference to the accompanying drawings in this application.

A traffic road is an area in which a pedestrian and a vehicle pass in a physical world. The traffic road includes a plurality of traffic intersections and traffic paths. This application provides a digital reconstruction method for a traffic road. The method is performed by a digital reconstruction system. A digital view of the traffic road may be constructed through the digital reconstruction method, and the digital view may display a running status of the traffic road in real time.

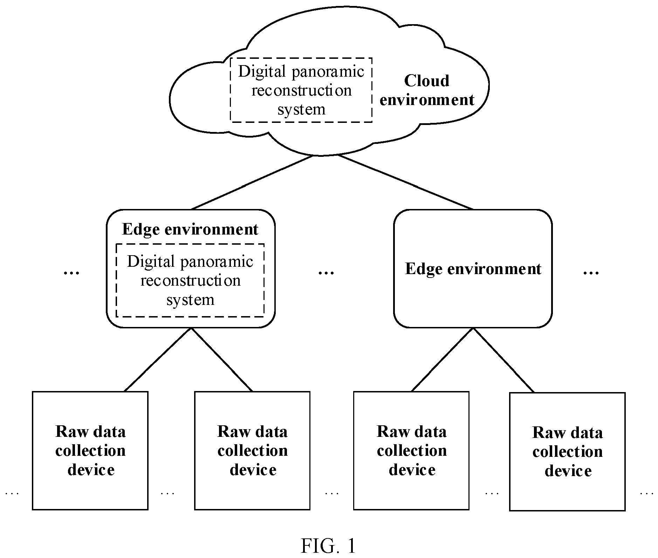

As shown in FIG. 1, the digital reconstruction system may be deployed in a cloud environment, and is specifically deployed on one or more computing devices (for example, central servers) in the cloud environment. The system may alternatively be deployed in an edge environment, and is specifically deployed on one or more computing devices (edge computing devices) in the edge environment. The edge computing devices may be servers. The cloud environment indicates a central computing device cluster owned by a cloud service provider and configured to provide computing, storage, and communication resources. The edge environment indicates an edge computing device cluster, geographically close to a raw data collection device, that is configured to provide computing, storage, and communication resources. The raw data collection device is a device configured to collect raw data required by the digital reconstruction system. The raw data collection device includes but is not limited to a camera, a radar, an infrared camera, a magnetic induction coil, and the like. The raw data collection device includes a device (namely, a static device), disposed at a fixed location on the traffic road, that is configured to collect real-time raw data (such as video data, radar data, and infrared data) on the traffic road from a view angle of the device, and further includes devices that dynamically collect data on the traffic road, such as a drone, an itinerant reading vehicle, and a dynamic device (for example, a reading pole) for manual data collection.

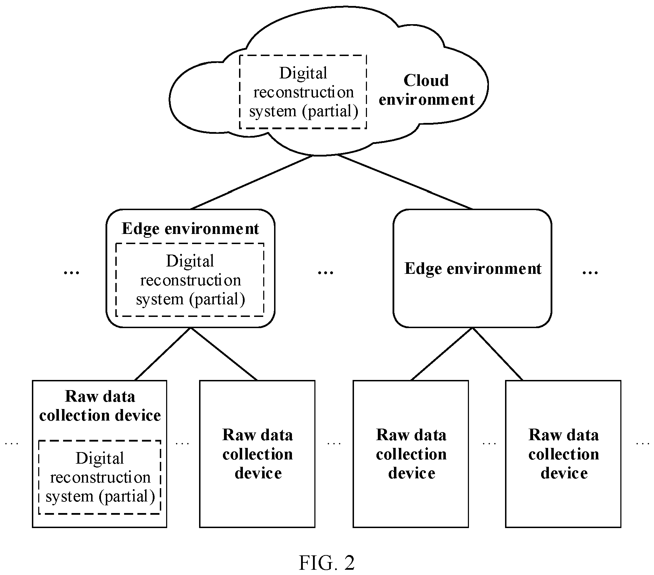

As shown in FIG. 2, the digital reconstruction system includes a plurality of parts (for example, includes a plurality of subsystems, and each subsystem includes a plurality of units). Therefore, the parts of the digital reconstruction system may also be deployed in different environments in a distributed manner. For example, a part of the digital reconstruction system may be separately deployed in three environments: the cloud environment, the edge environment, and the raw data collection device, or in any two of the three environments.

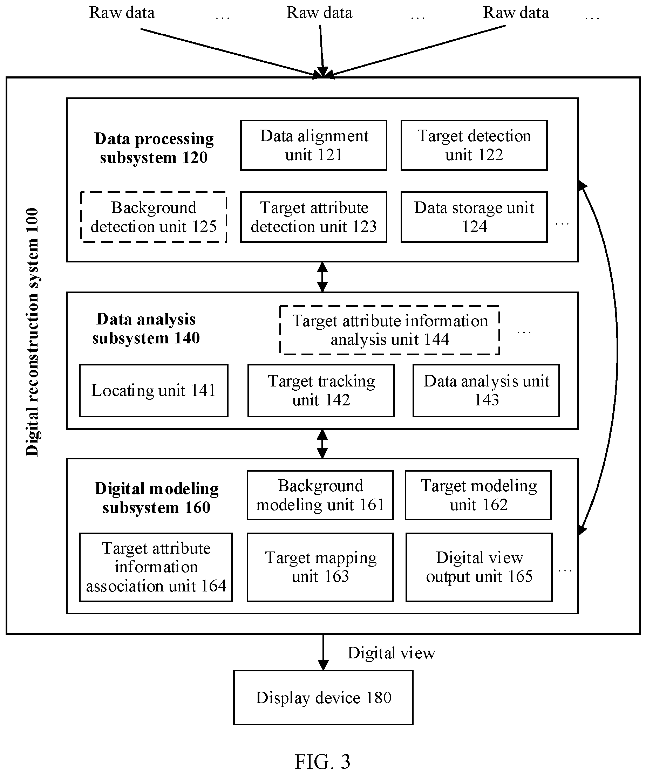

The digital reconstruction system is configured to perform digital modeling on the traffic road in the physical world based on the raw data collected by the raw data collection device. There may be a plurality of division manners for the subsystems and the units in the digital reconstruction system. This is not limited in this application. FIG. 3 shows an example division manner. As shown in FIG. 3, a digital reconstruction system 100 includes a data processing subsystem 120, a data analysis subsystem 140, and a digital modeling subsystem 160. The following separately and briefly describes a function of each subsystem and a function of a functional unit included in each system.

The data processing subsystem 120 is configured to receive raw data collected by at least one raw data collection device, and the raw data mainly includes video data shot by a camera disposed on the traffic road. In an embodiment, received video data is a real-time video stream that records a traffic status of the traffic road. The data processing subsystem 120 further processes the received raw data to obtain data with more semantics. The data processing subsystem includes a plurality of functional units. A data alignment unit 121 is configured to: receive video data collected by a plurality of cameras disposed at fixed locations on the traffic road, and perform time alignment on a plurality of pieces of video data, that is, extract a video frame that record a traffic status at a same moment, and output the video frame to a target detection unit 122. The target detection unit 122 is configured to detect a location and a type of a target existing in the video frame, to obtain location information and type information of the target. A target attribute detection unit 123 is configured to detect an attribute of each type of target based on a type of each target, to obtain attribute information of the target. A data storage unit 124 is configured to store data obtained by the target detection unit and the target attribute detection unit. The data may be read and used by functional units in the data analysis subsystem and the digital modeling subsystem.

Optionally, the data processing subsystem further includes a background detection unit 125. The background detection unit 125 is configured to receive raw data, collected by the raw data collection device, that is related to a traffic road background. The raw data may be video data and other data (for example, radar data and infrared data) that are collected by a device disposed at a fixed location on the traffic road. Alternatively, the raw data may be video data or other data collected by a drone and an itinerant reading vehicle that dynamically collect data. The background detection unit 125 is configured to detect and recognize a background object on the traffic road based on the received raw data, to obtain type information and location information of the background object.

It should be noted that, in this application, the target refers to an object moving on the traffic road or a movable object that is on the traffic road and that is still within a period of time, for example, a motor vehicle, a pedestrian, a non-motor vehicle, or an animal. The attribute information of the target refers to information related to the target, and the attribute information of the target includes direct attribute information and indirect attribute information. The direct attribute information is attribute information (for example, a color of a vehicle, a license plate number of the vehicle, a model of the vehicle, and a running speed of the vehicle) that is directly calculated, recognized, and obtained based on the target. The indirect attribute information is attribute information (for example, vehicle owner identity information and vehicle registration and maintenance information) that is obtained by further analyzing a direct attribute of the target or querying a related database based on the direct attribute of the target. Each target has attribute information. The type information of the target may be one type of attribute information of the target. To be specific, the type information of the target is one type of attribute information, of the target, that is used for classification. Other to-be-observed attribute information, corresponding to different types of targets obtained through classification based on the type information of the target, may be different. In this application, the background object refers to a static object on the traffic road or around the traffic road, including a road marking line, a warning sign, a traffic signal pole, a booth, a surrounding building, a roadside tree, a flower-bed, and the like.

The data analysis subsystem 140 is configured to read data processed by the data processing subsystem 120, and further process and analyze the data. The data analysis subsystem 140 includes a plurality of functional units. A locating unit 141 is configured to determine, based on pre-collected geographic coordinates of a control point in the physical world and pre-collected pixel coordinates of the control point in the video frame, a mapping relationship between pixel coordinates of a point in a video shot by each camera and geographic coordinates of the point, and obtain, based on the mapping relationship, geographic coordinates of the target that is in the physical world and that is detected by the target detection unit. A target tracking unit 142 is configured to: determine location information of a same target in two adjacent video frames, record pixel coordinates of the target at each moment, and obtain a moving track of the target in the video data. A data analysis unit 143 is configured to analyze a plurality of groups of processed data obtained from video data at a plurality of different view angles, to obtain data, of the target, at a panoramic view angle formed by the plurality of different view angles.

Optionally, the locating unit 141 may further be configured to obtain, based on the mapping relationship obtained in the foregoing manner, geographic coordinates of the background object that is in the physical world and that is detected by the background detection unit.

Optionally, the data analysis subsystem 140 further includes a target attribute information analysis unit 144. The target attribute information analysis unit 144 is configured to obtain the indirect attribute information of the target based on information, such as an attribute or a location of the target, that is obtained by the data processing subsystem 120 and the data analysis subsystem 140.

The digital modeling subsystem 160 is configured to perform digital reconstruction on the traffic road and the target on the road in the physical world based on data obtained by the data processing subsystem 120 and the data analysis subsystem 140, to obtain a digital view. The digital modeling subsystem 160 includes a background modeling unit 161, configured to perform modeling on the traffic road and a background object around the traffic road, to obtain a model corresponding to the background object on the traffic road. In another embodiment, the digital reconstruction system 100 may not include the background modeling unit 161, and the digital reconstruction system 100 may obtain, from another device or system, a model corresponding to a background object that has been modeled. A target modeling unit 162 is configured to perform modeling on the target based on the type information and the attribute information of the target that are obtained by the data processing subsystem 120 and the data analysis subsystem 140, to obtain a model corresponding to each target. A target mapping unit 163 is configured to map the model corresponding to each target to a map, to obtain the digital view of the traffic road. A target attribute information association unit 164 is configured to associate the attribute information of the target with a corresponding model, of the target, in the digital view. A digital view output unit 165 is configured to output the reconstructed digital view of the traffic road to a display device or another system, so that the display device displays the digital view or the another system performs a further operation based on the digital view.

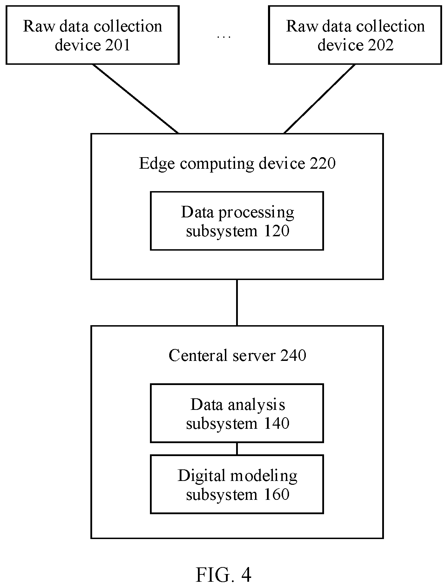

In this application, the digital reconstruction system 100 may be a software system, and subsystems and functional units included in the digital reconstruction system 100 are deployed on a hardware device in a relatively flexible manner. As shown in FIG. 1 and FIG. 2, the entire system may be deployed on one or more computing devices in one environment, or may be deployed on one or more computing devices in two or three environments in a distributed manner. For example, FIG. 4 is a schematic diagram of deployment of the digital reconstruction system 100 according to this application. The data processing subsystem 120 in the digital reconstruction system 100 is deployed on an edge computing device 220. The edge computing device 220 may be a traffic box, located near a raw data collection device 201 and a raw data collection device 202, that has a computing capability. The data analysis subsystem 140 and the digital modeling subsystem 160 are deployed on a central server 240. The central server may be located in a cloud data center. In the deployment form shown in FIG. 4, the raw data collection device 201 and the raw data collection device 202 collect raw data (including video data and other data) of a traffic road in real time. The raw data collection device 201 and the raw data collection device 202 send the collected raw data to the edge computing device 220. The edge computing device 220 executes software code included in the data processing subsystem 120 to process the raw data, to obtain processed data. The processed data is sent by the edge computing device 220 to the central server 240. The central server 240 receives the processed data, and executes software code included in the data analysis subsystem 140 and software code included in the digital modeling subsystem 160 to generate digital view data of the traffic road. Further, the central server 240 may send the digital view data to a display device, and the display device displays a digital view of the traffic road. In addition, a user may adjust and operate display of the digital view through the display device, to obtain digital views at different view angles, attribute information of a specified target, and the like. The display device may be a terminal device, for example, a mobile phone, a tablet computer, a vehicle-mounted computer, or a portable computer, or may be a visualization device located on an edge side or in a data center.

### Digital reconstruction of a traffic road

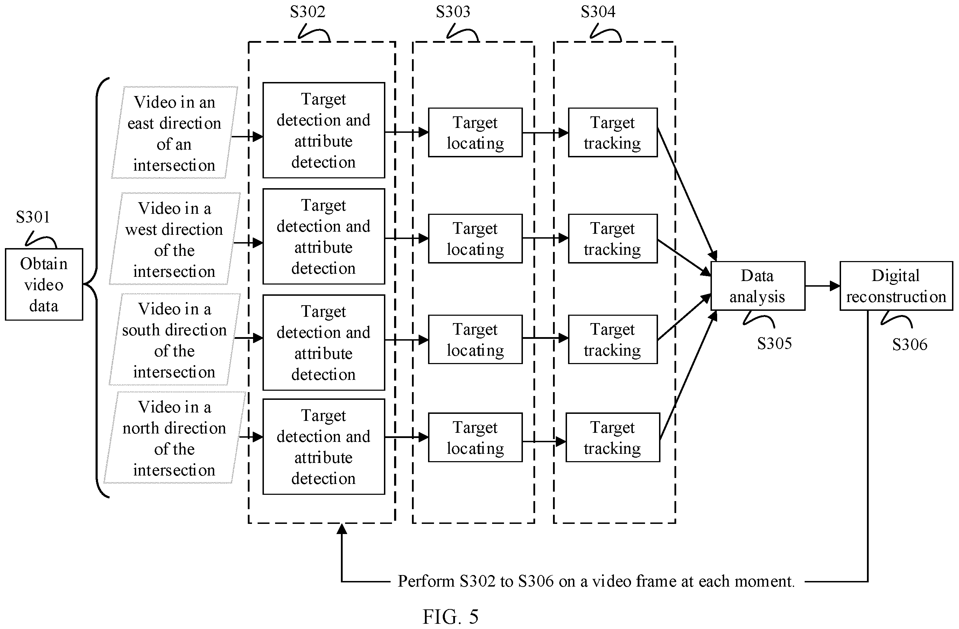

FIG. 5 is a schematic flowchart of a digital reconstruction method for the traffic road according to an embodiment of this application. The following specifically describes steps of the digital reconstruction method for the traffic road with reference to FIG. 5.

S301: Obtain raw data. Specifically, a digital reconstruction system obtains raw data, of the traffic road, that is collected by a raw data collection device in real time. The raw data includes video data. The video data is a video stream, shot by a camera disposed at a fixed location on the traffic road, that reflects a real-time traffic status of the traffic road. Generally, each intersection or road section on the traffic road is disposed with a plurality of cameras shooting from different view angles, and each camera shoots a traffic status of the traffic road from one view angle.

Optionally, in the step S301, radar data collected by the raw data collection device (for example, a millimeter-wave radar, a microwave radar, or an optoelectronic radar) may be further obtained, and information such as a location and a running speed of a target on the traffic road may be obtained by analyzing the radar data. The radar data may be used as a supplement to the video data because of high accuracy of the radar data in reflecting the location and the running speed of the target.

It should be noted that, in the step S301, the video stream may be continuously obtained in real time, and subsequent steps S302 to S306 are performed, from a time point, on a video frame obtained at each moment (as shown in FIG. 5, the steps S302 to S306 are performed on video frames collected at each moment by cameras disposed in four directions, namely, east, west, south, and north, of the traffic road). It should be understood that a segment of video data includes video frames at different moments, and the video frames in the video data are arranged in a time sequence. Each video frame is an image, and is used to reflect a traffic status of the traffic road shot at a moment.

S302: Perform target detection and attribute detection. Specifically, target detection is performed on a video frame, in each piece of video data, that is at a same moment, to obtain location information and type information of the target (where the location information of the target is pixel coordinates of the target in the video frame). Further, target attribute detection is performed on the detected target, to obtain attribute information of the target. Because a type of the target in the video frame is obtained in the target detection, an attribute type detected in the target attribute detection may be different based on a different type of the target. For example, if a detected type of the target is a motor vehicle, a to-be-detected attribute type of the motor vehicle includes a vehicle model, a vehicle body color, a license plate, and the like. If the detected type of the target is a pedestrian, a to-be-detected attribute type of the person includes: a gender, a clothing color, a body shape, and the like.

It should be noted that, when a plurality of pieces of video data are obtained, time alignment is first performed on the plurality of pieces of video data during the target detection, that is, video frames indicating a traffic status at a same moment in the plurality of pieces of video data are obtained; then, target detection and target attribute detection are performed on each video frame at the same moment.

Optionally, in the step S302, background detection may be further performed to detect a background object on the traffic road in the video frame, to obtain location information and type information of the background object.

S303: Perform target locating. The target locating is mainly to convert pixel coordinates corresponding to the target detected in the video frame into geographic coordinates of the target in a physical world. The pixel coordinates of the target are coordinates of a pixel at a location of the target in the video frame, and the pixel coordinates are two-dimensional coordinates. The geographic coordinates of the target are coordinates of the target in any coordinate system in the physical world. For example, in this application, three-dimensional coordinates including a longitude, a latitude, and an altitude that correspond to the location of the target on the traffic road are used as the geographic coordinates. A specific method for performing target locating is described in detail in a subsequent step.

Optionally, in the step S303, background locating may be further performed to convert pixel coordinates of the background object on the traffic road in the video frame into geographic coordinates.

S304: Perform target tracking. The target tracking refers to tracking locations, of a target recorded in the segment of video data, in different video frames. Specifically, in the video data, a target recorded in a video frame at a current moment and a target recorded in a video frame at a previous moment are determined as a same target. The two targets correspond to a same target ID, and pixel coordinates of the target ID in the video frame at the current moment are recorded in a target track table. The target track table records pixel coordinates, at the current moment and at a historical moment, of each target in an area shot by the camera (a moving track of the target may be obtained through fitting based on pixel coordinates of the target at the current moment and pixel coordinates of the target at the historical moment). When target tracking is performed, a type, a location, and an attribute of a target in a currently processed video frame that are obtained in the step S302 may be compared with a type, a location, and an attribute of a target in a cached processed video frame at the previous moment, to determine an association between the targets in two adjacent video frames. In other words, the targets that are determined as a same target in the two adjacent video frames are marked as a same target ID, and a target ID corresponding to each target and pixel coordinates of the target ID in the video frames are recorded. There are various target tracking methods. In this application, a target tracking method is described as an example in subsequent S601 to S606.

S305: Perform data analysis. When a plurality of groups of processed data (including data such as type information, geographic coordinates, and attribute information of the target) are obtained from a plurality of video frames at the same moment in the foregoing step, the plurality of groups of processed data are analyzed in this step, to obtain analyzed data. Specifically, for example, when type and attribute information of targets in the plurality of groups of data are the same and geographic coordinates of the targets are similar, weighted average is performed on the geographic coordinates of the targets in the plurality of groups of data to obtain analyzed geographic coordinates of the targets, and a group of type and attribute information of the targets in the plurality of groups of data and the analyzed target geographic coordinates of the targets are combined to form a group of analyzed data of the targets. For a target that exists only in a video frame from one view angle at the same moment but cannot be observed in another video frame at the same moment, data such as geographic coordinates, types, and attributes in a group of data corresponding to the video frame is obtained analyzed data such as geographic coordinates, types, and attributes. Through multi-directional data analysis, data of each target (for example, the geographic coordinates corresponding to the target) may be more accurate, and data of all targets on the traffic road that are shot by the plurality of cameras at the same moment may be obtained. The analyzed data of the targets can more accurately present the targets on the traffic road at the moment, and avoid incomplete target data, at a view angle of a single camera, caused by vehicle blocking, a view angle limitation, a light shadow, and the like.

Optionally, in the step S305, processed data obtained from raw data collected by different raw data collection devices may be also analyzed. For example, processed data obtained after the radar data is processed and processed data obtained from raw data collected by the cameras are analyzed, so that the data is more accurate. For example, for a geographic location of the target, analyzed geographic coordinates that are obtained after target detection, target locating and target geographic coordinate analysis are performed on the video data and geographic coordinates of the target that are obtained through calculation based on the radar data may be further analyzed (for example, weighted average is performed), so that obtained final geographic coordinates of the target are more accurate.

S306: Perform digital reconstruction. Modeling is performed on each target based on type information and attribute information of each target, to obtain a model corresponding to each target. Different types of targets correspond to different models, and a model corresponding to the target may be a three-dimensional model. The model corresponding to each target is mapped to a pre-obtained map based on analyzed geographic coordinates that correspond to each target and that are obtained in the step S305, to obtain a digital view of the traffic road (as shown in FIG. 5). The digital view of the traffic road may display a union set of areas shot by cameras from various view angles. The map is a three-dimensional map. Different areas may be displayed on the map by performing operations such as zooming in, zooming out, and rotating. Each point on the map corresponds to geographic coordinates in the physical world. The geographic coordinates are (m, n, h), where m represents a longitude; n represents a latitude; h represents an altitude; and m, n, and h are all real numbers.

The map may be provided by a map provider or constructed in advance. The map includes the background object on the traffic road (for example, a building around the traffic road, a flower-bed, a traffic marking line on the traffic road, or a traffic sign).

In another embodiment, the map may be provided by the map provider, and the map does not include some or all background objects on the traffic road. In this case, the step S306 further includes: performing modeling on the background object based on a type, of the background object on the traffic road, that is detected in the foregoing optional background detection process, to obtain a model corresponding to each background object; and also mapping, based on obtained geographic coordinates of each background object, the model corresponding to each background object to the map.

Optionally, the map may be obtained by performing digital modeling on the background object based on background data that is of the traffic road and that is collected in advance by a device such as a drone or a map collection vehicle. This type of map is a model map, and the model map has advantages of small memory occupation and a fast construction speed.

Optionally, when the map is constructed in advance, surrounding buildings of the traffic road and the traffic road may be scanned through a satellite or laser point cloud technology, to obtain a real-view image, and a real-view map is constructed for the traffic road and a surrounding environment of the traffic road based on a real-view image processing technology and a three-dimensional rendering technology. The real-view map may vividly and truly present a background status of the traffic road in the physical world.

Optionally, at any moment after the step S302, an operation of analyzing the attribute of the target may be further performed. Specifically, calculation and analysis are performed on direct attribute information of the target obtained in the step S302 (or the geographic coordinates of the target or the background object obtained in the step S303, the moving track of the target obtained in the step S304, the analyzed data of the target obtained in the step S305, and the like), or an associated database is queried, based on one or more types of data in the data to obtain indirect attribute information of the target. For example, the running speed of the target is calculated based on the analyzed geographic coordinates of the target and analyzed geographic coordinates of the target in a video frame at the previous moment; a posture of the target is analyzed based on the moving track of the target; and when the type of the target is a motor vehicle or a non-motor vehicle, the associated database is queried based on license plate information of the target to obtain vehicle owner identity information and vehicle maintenance information corresponding to the target.

Optionally, in the step S306, the three-dimensional model corresponding to the target is further associated with all or part of obtained attribute information of the target (including the direct attribute information of the target or the indirect attribute information of the target), and the attribute information of the target is sent to a display device, so that the attribute information of the target is displayed near a location of each target on a digital map displayed on the display device (or after an instruction sent by the display device is received, the attribute information of the target is sent to the display device, so that the display device displays the attribute information corresponding to the target).

It should be noted that an execution sequence of the step S304 and the step S305 is interchangeable. In other words, target tracking may be first performed. To be specific, a target in an obtained video frame is compared with a target in a processed video frame at the previous moment, a same target in the two video frames is marked as a same target ID, and a running track of each target ID in a period of time is obtained. Then, data corresponding to a same target in the plurality of video frames at the same moment is analyzed, to obtain an analyzed target ID and analyzed data corresponding to the analyzed target ID. Alternatively, the data corresponding to the same target in the plurality of video frames at the same moment may be first analyzed to obtain the analyzed target ID and the analyzed data corresponding to the analyzed target ID. Then, a target in each video frame is compared with the target in the processed video frame at the previous moment, and a same target in the two video frames are marked as a same analyzed target ID. After target tracking is performed in the step S304, a same target on the traffic road at each moment in a period of time may also be a same analyzed target ID in the digital view, and a used three-dimensional model and attribute information of the target are the same.

It should be noted that the step S301 is continuously performed to obtain a video stream shot by each camera in real time. The steps S302 to S306 are performed on each video frame in the video data obtained in the step S301. A target in the digital view obtained thereby may run with the target on the traffic road in the physical world, and the digital view may reflect the traffic status of the traffic road in real time.

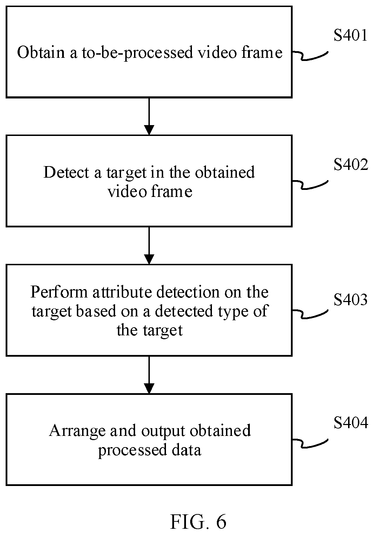

With reference to FIG. 6, the following describes in detail the step S302 of performing target detection and attribute detection on the video frame.

S401: Obtain a to-be-processed video frame. Specifically, when only one piece of video data is obtained in the step S301, a video frame (for example, a latest video frame) in the obtained video data is used as the to-be-processed video frame. When a plurality of pieces of video data are obtained in the step S301, a plurality of video frames at a same moment need to be searched for in the obtained plurality of pieces of video data. There is a plurality of methods for obtaining the plurality of video frames at the same moment. For example, in a method 1, a network time protocol (network time protocol, NTP) server is used to perform clock synchronization for clock systems in the plurality of cameras or crystal oscillator hardware for time synchronization is built in a camera. In this way, time of a time stamp corresponding to each frame in video data shot by each camera is more accurate. The plurality of video frames at the same moment are obtained through this method. To be specific, video frames that are in the plurality pieces of video data and have a same time stamp are obtained. In a method 2, homography transformation is performed on obtained video frames of the plurality of pieces of video data, to map the video frames of the plurality of pieces of video data to a same plane, and a plurality of overlapping video frames are searched for in the same plane. The plurality of overlapping video frames are video frames at the same moment. A video frame at a moment of a camera may be pre-selected, and homography transformation is performed on the video frame. An image obtained after the homography transformation is used as a reference to perform homography transformation on a video frame shot by another camera, to match an overlapping image. A video frame corresponding to the overlapping image and the pre-selected video frame are at the same moment. The homography transformation is mapping from one plane to another plane. A mapping relationship between a plane, of a video frame in video data at a view angle of each camera, and a same plane needs to be obtained through pre-calculation.

S402: Detect a target in the obtained video frame. In this step, a trained neural network model is mainly used to detect the target in the video frame. For example, a neural network model such as a YoLo, an SSD, or a recurrent convolutional neural network (recurrent convolutional neural network, RCNN) may be used. It should be noted that the neural network model needs to be trained in advance, and an annotation of a training image in a used training set should include types of a plurality of to-be-recognized targets (for example, a motor vehicle, a non-motor vehicle, a pedestrian, and an animal), so that the neural network model learns a feature of each type of target in the training set. Location information and type information of the target in the video frame may be obtained through the target detection. The location information is pixel coordinates of the target in the video frame, namely, pixel coordinates of a regression box corresponding to the target in the video frame, for example, pixel coordinates of two endpoints of an oblique line of the regression box in the video frame or pixel coordinates of a box contour of the regression box in the video frame. Data obtained through the target detection may be structured data. For example, each target corresponds to a target ID. The target ID and location information and type information of the target ID form a piece of structured data. When the plurality of video frames at the same moment are obtained in S401, the step S402 is performed on each video frame.

S403: Perform attribute detection on the target based on a detected type of the target. Target attribute detection is mainly performed based on collaboration of a plurality of neural network models or image processing algorithms, for example, a resnet classification model and a histogram color statistics algorithm. To-be-detected attributes of different types of targets may be different, and used target attribute detection methods may also be different. For example, attribute detection is performed on a target whose target type is a motor vehicle. Main to-be-detected attributes include: a motor vehicle model, a motor vehicle color, a license plate, and the like. A plurality of pre-trained neural network models may be used to detect the vehicle model, the color, and the license plate of the target, or a composite neural network model may be used. A target attribute detection method is not limited in this application. A method that can be used for attribute detection in the prior art or a method that can be used for attribute detection and that is generated through future research is applicable to this application.

Optionally, in the step S403, direct attribute information of the target is detected through the target attribute detection. Indirect attribute information of the target may be further obtained through analysis and query based on the detected direct attribute information of the target and the location and type information of the target. For example, owner identity information and registration and maintenance information of the motor vehicle may be obtained based on the license plate of the motor vehicle. A distance between the motor vehicle and a traffic marking line and a distance between the motor vehicle and a traffic signal light are obtained by comparing location information of the motor vehicle with a location of the background object.

It should be noted that, when the plurality of video frames at the same moment are obtained in S401, the steps S402 and S403 are performed on each video frame.

S404: Arrange and output obtained processed data, where processed data of the video frame obtained in the steps S402 and S403 may be output to another processing unit or storage unit in a form of structured data.

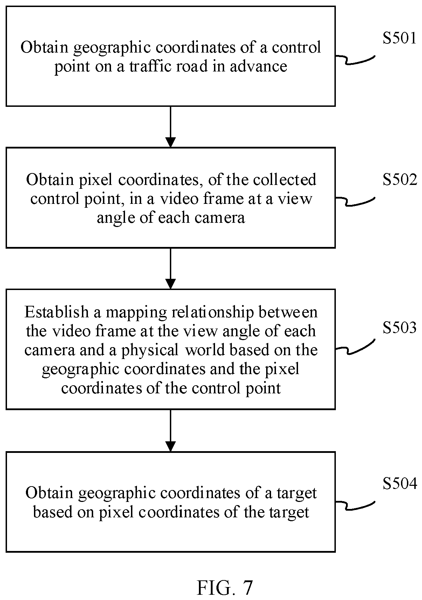

The following describes in detail the method for locating the detected target in the step S303 with reference to FIG. 7.

Data of location information of a target in a plurality of video frames may be obtained in the step S302 and the detailed description steps S401 to S404 of the step S302. The data of the location information is pixel coordinates of the target in the video frames. In the step S303, the pixel coordinates of the target are converted into geographic coordinates of the target in the physical world. A plurality of methods may be used to convert the pixel coordinates of the target into the geographic coordinates of the target in the physical world. An example of the methods is described as follows:

### S501: Obtain geographic coordinates of a control point on the traffic road in advance.

To obtain a mapping relationship between the pixel coordinates of the target and the geographic coordinates of the target in the physical world, some control points on the traffic road need to be selected in advance, and geographic coordinates of the control points need to be obtained and recorded. The control point on the traffic road is usually a sharp point of the background object on the traffic road, so that a location of a pixel, of the control point, in a video frame can be intuitively obtained. For example, a right-angle point of a traffic marking line, a sharp point of an arrow, and a corner point of a green belt on the traffic road are used as control points. Geographic coordinates (longitude, latitude, and altitude) of the control points may be collected manually, or may be collected by a drone. Selected control points of the traffic road need to be evenly distributed on the traffic road, to ensure that at least three control points can be observed from a view angle of each camera. A quantity of to-be-selected control points depends on an actual situation.

S502: Obtain pixel coordinates, of the collected control point, in a video frame at the view angle of each camera.

A video of the traffic road shot by each camera fixedly disposed on the traffic road is read, and corresponding pixel coordinates of an observable control point is obtained from any video frame shot by each camera. The pixel coordinates may be manually obtained or may be obtained through a program. For example, corresponding pixel coordinates, of the control point on the traffic road, in the video frame are obtained through corner point detection, a short-time Fourier transform edge extraction algorithm and a sub-pixel coordinate fitting method. At least three control points should be visible in the video shot by each camera. To be specific, any video frame shot by each camera should include pixel coordinates corresponding to at least three control points. Pixel coordinates and geographic coordinates of a control point in a video at a shooting angle of each camera may be collected in the step S501 and the step S502.

S503: Establish a mapping relationship between the video frame at the view angle of each camera and the physical world based on the geographic coordinates and the pixel coordinates of the control point. For example, a homography transformation matrix H for converting pixel coordinates into geographic coordinates may be calculated according to a homography transformation principle, and a homography transformation formula is (m,n,h)=H^{∗}(x,y). An H matrix corresponding to video data shot by each camera may be obtained through calculation based on pixel coordinates (x, y) and geographical coordinates (m, n, h) of the at least three control points in the video at the shooting angle of each camera obtained in the steps S501 and S502. The H matrix corresponding to the video data shot by each camera is different.

S504: Obtain the geographic coordinates of the target based on the pixel coordinates of the target. After the H matrix corresponding to the video data shot by each camera is obtained in the steps S501 to S503, the pixel coordinates of the target obtained in the step S302 may be converted based on the H matrix to obtain the geographic coordinates of the target. It should be noted that different video frames are separately converted based on H matrices corresponding to respective cameras, to obtain a plurality of corresponding geographic coordinates of the target.

It should be noted that execution time of the steps S501 to S503 should not be later than that of the step S504, and specific execution time is not limited. For example, the steps S501 to S503 may be performed when a digital system is initialized.

Optionally, a method for establishing the mapping relationship between the video frame at the view angle of each camera and the physical world may further be: mapping the video frame to a three-dimensional high-definition map, calculating a mapping relationship between the video frame at the view angle of each camera and the map, and obtaining the geographic coordinates of the target based on the mapping relationship and the pixel coordinates of the target. Specifically, the three-dimensional high-definition map is obtained in advance, and a video frame at a moment in video data shot by a camera is used as a reference. The three-dimensional high-definition map is deformed (zoomed in, zoomed out, moved by an angle, or the like), to match content of the video frame with a part presented on the three-dimensional high-definition map. A mapping relationship between the video frame and the three-dimensional high-definition map during matching is calculated. In this method, the mapping relationship between the video frame at the view angle of each camera and the physical world is automatically obtained through an automatic matching algorithm and a perspective transformation principle.

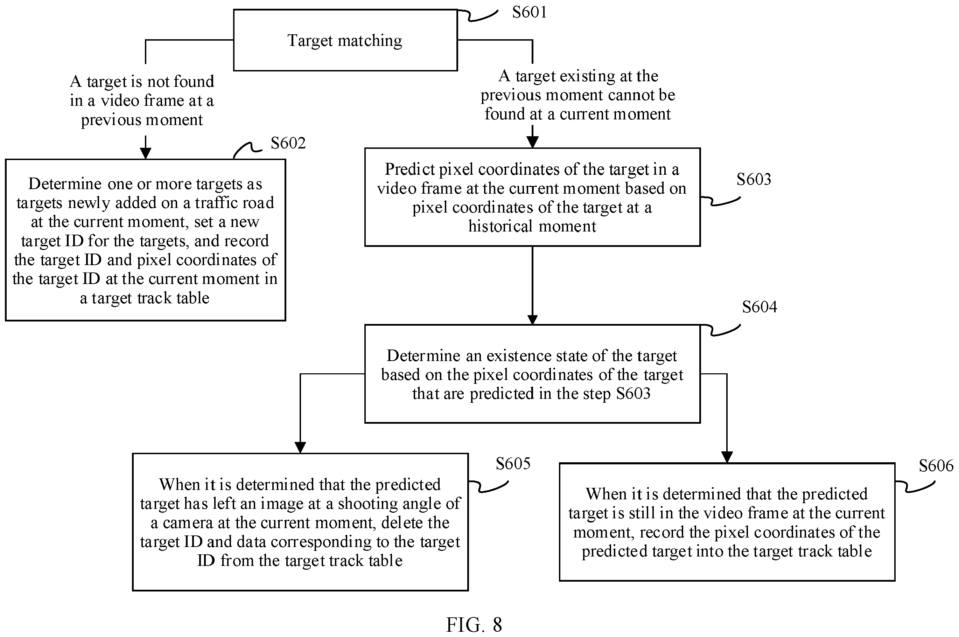

The following describes an example of the target tracking methods in the step S304 with reference to FIG. 8.

S601: Perform target matching. A target detected in a current video frame is matched with a target in a video frame at a previous moment based on one or more pieces of data such as location information (namely, pixel coordinates of the target in the video frame), type information, and attribute information of the target detected in the current video frame. For example, a target ID of the target in the current video frame is determined based on an overlap rate between a regression box of the target in the current video frame and a regression box of the target in the video frame at the previous moment. When an overlap rate between the regression box of the target in the current video frame and a regression box of a target in the video frame at the previous moment is greater than a preset threshold, it is determined that the target at a current moment and the target at the previous moment are the same. The target ID corresponding to the target is found in the target track table, and corresponding pixel coordinates are recorded. It should be understood that the step S601 and a subsequent step are performed on each target detected in the current video frame.

S602: When one or more targets in the current video frame do not match the target in the video frame at the previous moment (in other words, the one or more targets are not found in the video frame at the previous moment; for example, a motor vehicle just enters into an area of a traffic intersection shot by a camera at the current moment) in the step S601, it is determined that the one or more targets are targets newly added on the traffic road at the current moment, and a new target ID is set for the targets, where the target ID uniquely identifies the targets, and the target ID and pixel coordinates of the target ID at the current moment are recorded in the target track table.

S603: When one or more targets at the previous moment do not match the target in the video frame at the current moment (in other words, the target existing at the previous moment cannot be found at the current moment; for example, the target is partially or fully blocked by another target at the current moment, or the target has left an area of the traffic road shot by the camera at the current moment) in the step S601, pixel coordinates of the target in the video frame at the current moment are predicted based on pixel coordinates, of the target at a historical moment, that are recorded in the target track table (for example, a three-point extrapolation method or a track fitting algorithm is used).

S604: Determine an existence state of the target based on the pixel coordinates of the target that are predicted in the step S603. When the predicted pixel coordinates of the target are outside or at an edge of the current video frame, it may be determined that the predicted target has left an image at a shooting angle of the camera at the current moment. When the predicted pixel coordinates of the target are inside and not at the edge of the current video frame, it is determined that the target is still in the video frame at the current moment.

S605: When it is determined in the step S604 that the predicted target has left the image at the shooting angle of the camera at the current moment, delete the target ID and data corresponding to the target ID from the target track table.

S606: When it is determined in the step S604 that the predicted target is still in the video frame at the current moment, record the predicted pixel coordinates of the target into the target track table.

The steps S601 to S605 are performed on each target in a video frame at each moment in video data shot by each camera.

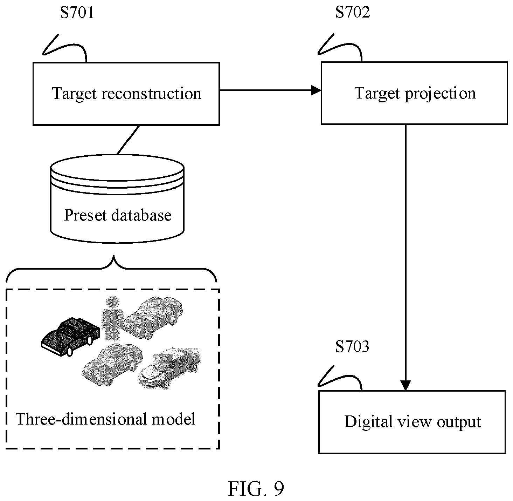

The following specifically describes the digital modeling method in the step S306 with reference to FIG. 9.

S701: Perform target modeling. Specifically, the three-dimensional model corresponding to the target is obtained by searching a preset database based on the type information (and some or all of the attribute information) of the target obtained in the steps S302 to S305. The preset database includes many three-dimensional models, and each three-dimensional model in the database is associated with a type (and an attribute) corresponding to the three-dimensional model. When the database is searched, a type (and an attribute) corresponding to a to-be-searched three-dimensional model may be entered to obtain the three-dimensional model corresponding to the type (and the attribute). For example, for a target to be modeled, an analyzed target ID of the target obtained in the step S305 is 001, a target type corresponding to the analyzed target ID is a motor vehicle, and a color in attribute information data is red. Therefore, for the target, a three-dimensional model whose type is a motor vehicle and whose color is red is searched for in the preset database, and the three-dimensional model associated with the target may be obtained by entering or selecting the motor vehicle and the red. The obtained three-dimensional model corresponding to the target is set to be associated with the analyzed target ID, of the target, that is set in the step S305, so that the analyzed target ID uniquely corresponds to one three-dimensional model.

Optionally, in the step S701, background object modeling may also be performed. A model corresponding to the type of the background object is obtained by searching a preset background database based on the detected type of the background object. The preset background database and the foregoing database may be a same database or may be different databases.

S702: Perform target mapping. A three-dimensional model corresponding to the analyzed target ID corresponding to each target is mapped to the geographic coordinates on the map based on the analyzed geographic coordinates of each target. Specifically, the analyzed geographic coordinates of each target may be one coordinate value (for example, analyzed geographic coordinates corresponding to a central point of the target), or may be a plurality of coordinate values (for example, analyzed geographic coordinates corresponding to the regression box of the target). When the three-dimensional model corresponding to the target is mapped to the map, a location of the corresponding three-dimensional model on the map is determined based on the analyzed geographic coordinates of the target, and then the three-dimensional model is mapped to the corresponding location on the map. For example, if the analyzed geographic coordinates of the target is a location of the regression box of the target, after the location of the regression box of the target is determined on the map, a corresponding three-dimensional model is mapped into the determined regression box.

Optionally, in the step S702, a posture of the target may be further considered during the target mapping. The posture of the target indicates a moving direction of the target. The three-dimensional model is mapped based on the posture of the target, and the posture of the target is an orientation of the target, for example, a direction corresponding to a head of the motor vehicle or a face orientation of a pedestrian. There are many methods for estimating the posture of the target. This is not limited in this application. For example, data analysis may be performed on the moving track, obtained in the step S304, of the target in the plurality of video frames at the same moment, to obtain an analyzed moving track of the target in the physical world, and a tangential direction of the analyzed moving track is used as the posture of the target. Alternatively, a multi-angle image detection technology may be used to determine the posture of the target. When target mapping is performed, the three-dimensional model corresponding to the target is mapped based on an obtained posture of the target. For example, for a motor vehicle that is making a turn, a body of a three-dimensional model corresponding to the motor vehicle is mapped based on a tangential direction of an obtained track of the motor vehicle, so that the mapped three-dimensional model can display a driving direction of the motor vehicle.

Optionally, in the step S702, background object mapping may be further performed. When the pre-obtained map does not include part or all content of the background object, a model corresponding to the background object may be mapped to a corresponding location on the map based on detected geographic coordinates of the background object.

S703: Output a digital view. After the target modeling and the target mapping, a target at a moment on the traffic road and the pre-obtained map are combined to form the digital view (as shown in FIG. 9) of the traffic road. Obtained digital view data is sent to the display device, and the display device displays the digital view of the traffic road.

Optionally, in the step S702 or S703, the three-dimensional model corresponding to the target is further associated with all or part of the obtained attribute information of the target (including the direct attribute information of the target or the indirect attribute information of the target), and the attribute information of the target is sent to the display device, so that the attribute information of the target is displayed near the location of each target on the digital map (or after the instruction sent by the display device is received, the attribute information of the target is sent to the display device, so that the display device displays the attribute information corresponding to the target).

It should be noted that, because the step S301 is continuously performed in real time on the video data shot by each camera disposed on the traffic road, the steps S302 to S306 are cyclically performed on video frames obtained at different moments in the step S301, so that a location and a posture of a target in the digital view of the traffic road displayed by the display device change with a change of the target on the traffic road in the physical world. In this way, the digital view can reflect a current traffic status of the traffic road in real time (for example, a running status of each target and traffic congestion at each traffic intersection in each intersection direction).

### Application of a digital view of a traffic road

A digital view obtained through a digital reconstruction method for the traffic road can continuously display a traffic status of the entire traffic road in real time. The digital view may be displayed by a display device. A user may change a display angle of the digital view by performing an operation on a display interface of the display device. To be specific, the user may observe the traffic status of the traffic road from different view angles. These view angles may be different from shooting angles of cameras disposed on the traffic road. For example, a digital view established based on video data of an intersection at east, west, south, and north view angles may provide a traffic status at a view angle such as an overlook angle, a rear angle of a vehicle, and an oblique angle.

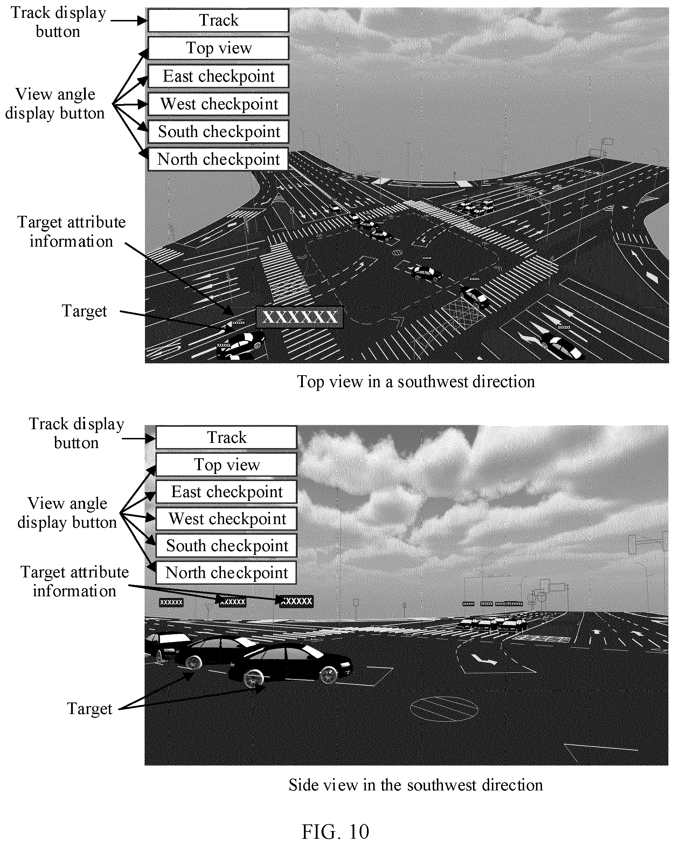

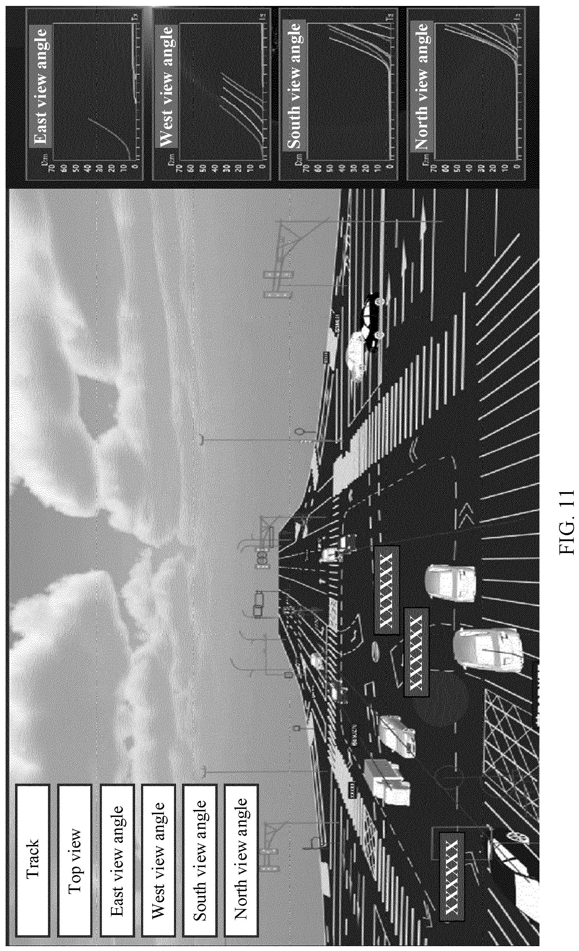

FIG. 10 shows a graphical user interface of an overlooking digital view and a graphical user interface of a side-looking digital view that are in a southwest direction of the traffic road and that are displayed on the display device. As shown in FIG. 10, the user clicks a view angle adjustment button (for example, the view angle adjustment button includes a top view, an east checkpoint, a west checkpoint, a south checkpoint, and a north checkpoint) in a management window of the graphical user interface. A digital reconstruction system receives view angle adjustment information, to provide, for the display device, a digital view at a view angle corresponding to the view angle adjustment button. The display device displays the digital view at the view angle corresponding to the view angle adjustment button. Alternatively, the display device may receive a touch operation of the user on the display screen, and display a digital view of any view angle based on the touch operation. As shown in FIG. 11, a graphical user interface of a digital view on the display device may further include a track display button. The user may click the track display button to view a real-time running track of some or all targets on the traffic road. In FIG. 11, four small graphs on the right of the graphical user interface further display real-time running statuses of vehicles in four directions of a traffic intersection. The running statuses of the vehicles are represented by lines of different colors. A horizontal coordinate of each small graph is time, and a vertical coordinate is a driving distance of a vehicle. A driving speed of each vehicle may be observed by observing in real time a trend of a line corresponding to each vehicle.

As shown in FIG. 10, the digital view of the traffic road displayed on the display device may further display target attribute information associated with a three-dimensional model of a target, for example, a license plate of a motor vehicle, owner information of the motor vehicle, and a current driving speed of the vehicle. Whether the target attribute information is displayed may be controlled by an operation of the user on the graphical user interface (for example, clicking a three-dimensional model corresponding to a target whose attribute information is to be viewed in the digital view), or may be automatically displayed by the digital reconstruction system.

It should be understood that FIG. 10 and FIG. 11 merely show examples of digital views of the traffic road including one traffic intersection from different view angles. The digital view obtained according to this application may include a plurality of traffic intersections and traffic paths (for example, the digital view may present a traffic status of areas shot by all cameras disposed in a city). The digital view obtained through digital reconstruction method for the traffic road provided in this application occupies a small memory, has high real-time performance, and can be easily used in various application scenarios.

The display device may be a vehicle-mounted display device in a vehicle running on the traffic road. A vehicle owner may globally observe, through the digital view, a traffic status (including congestion, a road condition, a lane marking line, and the like) of the traffic road on which the vehicle is driving, and the vehicle owner may observe, through the digital view, a situation that cannot be observed from a view angle of the vehicle owner. For example, when driving a dump truck with a large vehicle body, a driver has a blind area around the vehicle body. This is prone to danger. Through the digital view, the driver can observe the blind area that cannot be observed by the driver, and handle a dangerous situation in the blind area in a timely manner to avoid an accident.

The display device may alternatively be a desktop computer, a tablet computer, a handheld intelligent display device, or the like of a management department. Management department personnel may manage and control the traffic status in a timely manner by observing the digital view. The management personnel can manage the target on the traffic road based on the target attribute information displayed in the digital view. For example, if a speed of a vehicle displayed in the digital view is greater than a maximum speed limit of the road, the management personnel can deduct points and impose penalties on an owner of the vehicle based on license plate information of the vehicle.

The digital reconstruction system of the traffic road and the graphical user interface of the digital view may be combined with another module or system to provide another function. For example, the digital reconstruction system and the graphical user interface of the digital view are combined with a traffic signal light management system. When the digital reconstruction system detects a motor vehicle, in a direction of a traffic intersection, whose stay time exceeds a threshold, the digital reconstruction system sends a request message to the traffic signal light management system. The traffic signal light management system receives the request message, adjusts a signal light on the traffic road indicated in the request message (for example, setting a color of a signal light in a congestion direction to green in a relatively long time period), and the traffic signal light management system sends a signal light change message to the digital reconstruction system. The digital reconstruction system reconstructs a digital view of the traffic road at the moment based on the signal light change message and a change of a traffic signal light in video data, so that a traffic signal light in the digital view displayed on the graphical user interface also changes.

Refer to FIG. 2. This application provides the digital reconstruction system 100. The system is configured to perform the steps S301 to S306 (and specific implementation steps S401 to S404 of the step S302, specific implementation steps S601 to S606 of the step S304, and specific implementation steps S701 to S703 of the step S306) in the foregoing method embodiments. In addition, the system optionally performs the optional methods in the foregoing steps. The system includes the data processing subsystem 120, the data analysis subsystem 140, and the digital modeling subsystem 160.

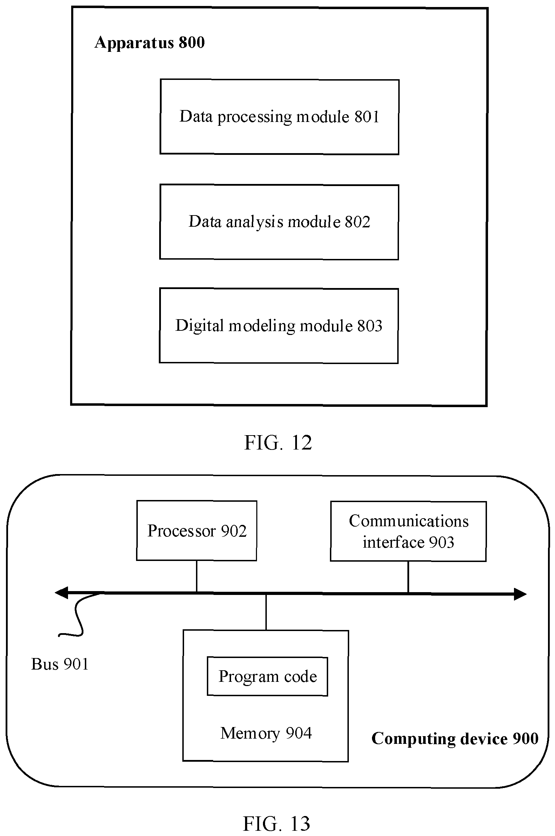

As shown in FIG. 12, this application provides an apparatus 800. The apparatus is configured to perform the digital reconstruction method for the traffic road. Division of functional modules in the apparatus is not limited in this application. The following provides an example of the division of the functional modules.

The apparatus 800 includes a data processing module 801, a data analysis module 802, and a digital modeling module 803.

The data processing module is configured to obtain video data. The video data is shot by a camera disposed on the traffic road, and the video data records a plurality of targets on the traffic road. The data analysis module is configured to determine a running track of each target on the traffic road based on the video data. The digital modeling module is configured to establish a digital view of the traffic road. The digital view includes a plurality of models. Each model represents each target on the traffic road. Each model in the digital view runs based on a running track of a target that corresponds to the model and that is on the traffic road.

Specifically, in some embodiments, the data processing module 801 is configured to perform the steps S301 and S302 (and the specific implementation steps S401 to S404 of the step S302), and optionally perform the optional methods in the steps.

The data analysis module 802 is configured to perform the steps S303 to S305 (and the specific implementation steps S601 to S606 of the step S304), and optionally perform the optional methods in the steps.

The digital modeling module 803 is configured to perform the step S306 (and the specific implementation steps S701 to S703 of the step S306), and optionally perform the optional methods in the steps.

The three modules may communicate data to each other through a communications channel. It should be understood that the modules included in the apparatus 800 may be software modules, or may be hardware modules, or some of the modules are software modules and some of the modules are hardware modules.

As shown in FIG. 13, this application further provides a computing device 900. The computing device 900 includes a bus 901, a processor 902, a communications interface 903, and a memory 904. The processor 902, the memory 904, and the communications interface 903 communicate with each other through the bus 901.

The processor may be a central processing unit (English: central processing unit, CPU for short). The memory may include a volatile memory (English: volatile memory), for example, a random access memory (English: random access memory, RAM for short). The memory may further include a non-volatile memory (English: non-volatile memory), for example, a read-only memory (English: read-only memory, ROM for short), a flash memory, an HDD, or an SSD. The memory stores executable code, and the processor executes the executable code to perform the digital reconstruction method for the traffic road. The memory may further include another software module, such as an operating system, required for running a process. The operating system may be LINUX^{™}, UNIX^{™}, WINDOWS^{™}, or the like.

The memory of the computing device 900 stores code corresponding to each module of the apparatus 800, and the processor 902 executes the code to implement a function of each module of the apparatus 800, that is, performs the method in S301 to S306. The computing device 900 may be a computing device in a cloud environment or a computing device in an edge environment.

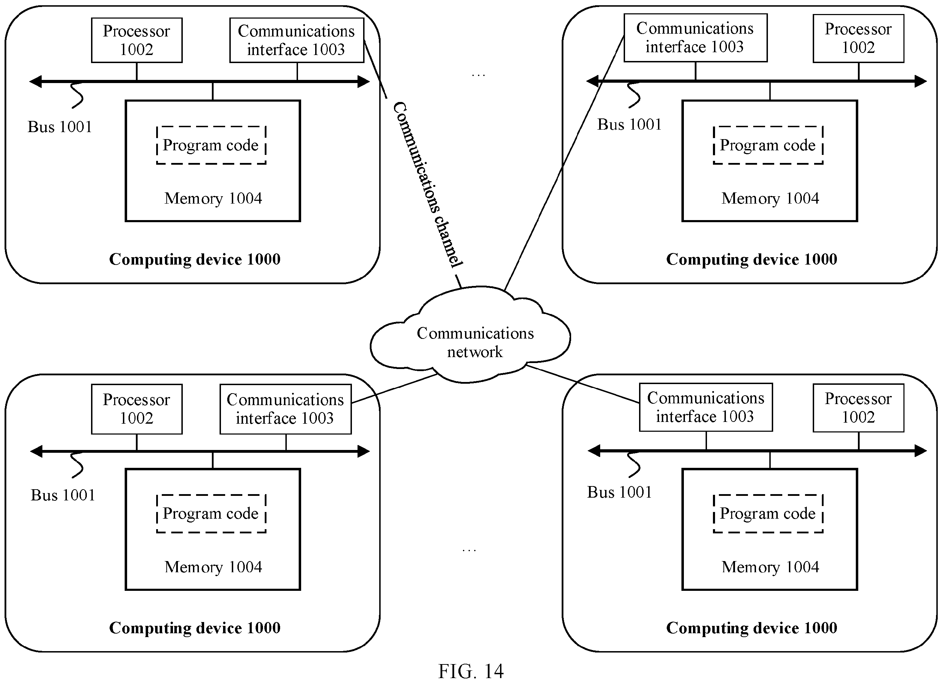

As shown in FIG. 4, various parts of a digital panoramic reconstruction system may run on a plurality of computing devices in different environments. Therefore, this application further provides a computing device system including a plurality of computing devices. As shown in FIG. 14, the computing device system includes a plurality of computing devices 1000. Each computing device 1000 includes a bus 1001, a processor 1002, a communications interface 1003, and a memory 1004. The processor 1002, the memory 1004, and the communications interface 1003 communicate with each other through the bus 1001. A communications channel is established between the computing devices 1000 through a communications network. The processor 1002 may be a CPU. The memory 1004 may include a volatile memory (English: volatile memory), for example, a RAM. The memory 1004 may further include a non-volatile memory, such as a ROM, a flash memory, an HDD, or an SSD. The memory 1004 stores executable code, and the processor 1002 executes the executable code to perform a part of a digital reconstruction method for a traffic road. The memory 1004 may further include another software module, such as an operating system, required for running a process. The operating system may be LINUX^{™}, UNIX^{™}, WINDOWS^{™}, or the like.

Any computing device 1000 may be a computing device in a cloud environment, a computing device in an edge environment, or a computing device in a terminal environment. For example, the computing device 1000 may be the edge computing device 220 or the central server 240 in FIG. 4.

In some embodiments, the display device configured to display FIG. 10 and FIG. 11 and the computing device 900 or the computing device system including a plurality of computing devices may constitute a system. The system may implement an integrated function of computing, constructing, and displaying a digital view, and may be used in a plurality of application environments.

A description of a procedure corresponding to each of the accompanying drawings has a focus. For a part that is not described in detail in a procedure, refer to a related description of another procedure.

All or some of the foregoing embodiments may be implemented through software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedure or functions according to the embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium (for example, an SSD).

## Claims

1. A digital reconstruction method for a traffic road, comprising:
obtaining video data, wherein the video data is shot by a camera disposed on the traffic road, and the video data records a plurality of targets on the traffic road;
determining a running track of each target on the traffic road based on the video data; and
establishing a digital view of the traffic road, wherein the digital view comprises a plurality of models, each model represents each target on the traffic road, and each model in the digital view runs based on a running track of a target that corresponds to the model and that is on the traffic road.

2. The method according to claim 1, wherein the method further comprises:
determining type information of each target based on the video data, wherein correspondingly, different models in the digital view correspond to different types of targets.

3. The method according to claim 1 or 2, wherein there is a plurality of cameras disposed on the traffic road, and view angles of video data collected by different cameras of the plurality of cameras are different.

4. The method according to claim 1 or 3, wherein the method further comprises:
displaying the digital view or sending the digital view to a display apparatus, wherein a view angle of the displayed digital view is the same as or different from a view angle of the video data.

5. The method according to any one of claims 1 to 4, wherein the method further comprises:
obtaining attribute information of each target, wherein
the digital view further comprises the attribute information of each target.

6. The method according to claim 5, wherein the target on the traffic road may be a vehicle, and attribute information of the target comprises one or more pieces of the following information: a color of the vehicle, a license plate number of the vehicle, a model of the vehicle, a running speed of the vehicle, vehicle owner identity information, and vehicle registration and maintenance information.

7. The method according to any one of claims 1 to 6, wherein the video data comprises video data at a first moment; and
the determining a running track of each target on the traffic road based on the video data comprises:
determining, based on the video data at the first moment, geographic coordinates of each target on the traffic road at the first moment; and
determining the running track of each target on the traffic road based on the geographic coordinates of each target on the traffic road at the first moment and geographic coordinates of each target on the traffic road before the first moment.

8. The method according to any one of claims 1 to 7, wherein the method further comprises: determining a posture of each target based on the running track of each target on the traffic road, wherein
each model in the digital view runs based on the running track and a posture of the target, on the traffic road, that corresponds to the model.

9. The method according to any one of claims 1 to 8, wherein the method further comprises:
recognizing a background object on the traffic road based on the video data, wherein
the digital view further comprises a model representing the background object on the traffic road.

10. The method according to any one of claims 1 to 9, wherein the method further comprises:
obtaining a map of the traffic road; and
the establishing a digital view of the traffic road comprises:
obtaining a model corresponding to each target, and mapping the model corresponding to each target to the map of the traffic road based on the running track of each target on the traffic road, to obtain the digital view of the traffic road.

11. A method for providing a digital view of a traffic road, comprising:
presenting, to a user, the digital view of the traffic road from a first view angle, wherein the digital view comprises a plurality of models, each model represents each target on the traffic road, each model runs based on a running track of a target that corresponds to the model and that is on the traffic road, and a running track of each target on the traffic road is obtained through calculation based on video data shot by a camera on the traffic road;
receiving view angle adjustment information sent by the user, wherein the view angle adjustment information is used to request to observe the digital view from a second view angle; and
presenting, to the user based on the view angle adjustment information, the digital view from the second view angle.

12. The method according to claim 11, wherein different models in the digital view correspond to different types of targets.

13. The method according to claim 11 or 12, wherein the method further comprises:
presenting attribute information of a target to the user, wherein the attribute information of the target is associated with a model, corresponding to the target, in the digital view.

14. The method according to claim 13, wherein the presenting attribute information of a target to the user specifically comprises:
receiving instruction information of the user; and
displaying, based on the instruction information of the user, the attribute information of the target in the digital view of the traffic road from the first view angle.

15. The method according to any one of claims 11 to 14, wherein the method further comprises: presenting, to the user, running tracks of the plurality of models in the digital view.

16. The method according to any one of claims 11 to 15, wherein the digital view further comprises a background on the traffic road, and the background comprises a marking line on the traffic road and an object around the traffic road.

17. The method according to any one of claims 11 to 16, wherein the traffic road comprises a plurality of intersections, and the digital view of the traffic road coherently presents each intersection and a model corresponding to a target running on each intersection.

18. A graphical user interface system, comprising:
a digital view window, configured to display a digital view of the traffic road, wherein the digital view comprises a plurality of models, each model represents each target on the traffic road, and each model in the digital view runs based on a running track of a target that corresponds to the model and that is on the traffic road;
a management window, comprising a button selectable by a user, wherein the button selectable by the user comprises a view angle adjustment button, and after the view angle adjustment button is selected by the user, the digital view window displays a digital view of the traffic road from a view angle corresponding to the view angle adjustment button.

19. The graphical user interface system according to claim 18, wherein different models in the digital view correspond to different types of targets.

20. The graphical user interface system according to claim 18 or 19, wherein the digital view further comprises attribute information of a target, and the attribute information of the target is associated with a model corresponding to the target.

21. The graphical user interface system according to claims 18 to 20, wherein the digital view further comprises a running track of each model, and the running track of each model is obtained based on a running track of each target on the traffic road.

22. The graphical user interface system according to any one of claims 18 to 21, wherein the button selectable by the user further comprises a track display button, and after the track display button is selected by the user, the digital view window displays the running track of each model.

23. The graphical user interface system according to claim 21 or 22, wherein the running track of each model comprises a running path of each model at a future moment.

24. The graphical user interface system according to any one of claims 18 to 23, wherein the digital view further comprises a background on the traffic road, and the background comprises a marking line on the traffic road and an object around the traffic road.

25. The graphical user interface system according to any one of claims 18 to 24, wherein the traffic road comprises a plurality of intersections, and the digital view of the traffic road coherently presents each intersection and a model corresponding to a target running on each intersection.

26. An apparatus, wherein the apparatus comprises:
a data processing module, configured to obtain video data, wherein the video data is shot by a camera disposed on a traffic road, and the video data records a plurality of targets on the traffic road;
a data analysis module, configured to determine a running track of each target on the traffic road based on the video data; and
a digital modeling module, configured to establish a digital view of the traffic road, wherein the digital view comprises a plurality of models, each model represents each target on the traffic road, and each model in the digital view runs based on a running track of a target that corresponds to the model and that is on the traffic road.

27. The apparatus according to claim 26, wherein the data processing module is further configured to determine type information of each target based on the video data, wherein correspondingly, different models in the digital view correspond to different types of targets.

28. The apparatus according to claim 26 or 27, wherein there is a plurality of cameras disposed on the traffic road, and view angles of video data collected by different cameras of the plurality of cameras are different.

29. The apparatus according to any one of claims 26 to 28, wherein the digital modeling module is further configured to display the digital view or send the digital view to a display apparatus, wherein a view angle of the displayed digital view is the same as or different from a view angle of the video data.

30. The apparatus according to any one of claims 26 to 29, wherein the data processing module is further configured to obtain attribute information of each target, and the digital view further comprises the attribute information of each target.

31. The apparatus according to claim 30, wherein the target on the traffic road may be a vehicle, and attribute information of the target comprises one or more pieces of the following information: a color of the vehicle, a license plate number of the vehicle, a model of the vehicle, a running speed of the vehicle, vehicle owner identity information, and vehicle registration and maintenance information.

32. The apparatus according to any one of claims 26 to 31, wherein the video data comprises video data at a first moment; and
the data analysis module is specifically configured to: determine geographic coordinates of each target on the traffic road at the first moment based on the video data at the first moment, and determine the running track of each target on the traffic road based on the geographic coordinates of each target on the traffic road at the first moment and geographic coordinates of each target on the traffic road before the first moment.

33. The apparatus according to any one of claims 26 to 32, wherein the data processing module is further configured to determine a posture of each target based on the running track of each target on the traffic road; and each model in the digital view runs based on the running track and a posture of the target, on the traffic road, that corresponds to the model.

34. The apparatus according to any one of claims 26 to 33, wherein
the data processing module is further configured to recognize a background object on the traffic road based on the video data; and the digital view further comprises a model representing the background object on the traffic road.

35. The apparatus according to any one of claims 26 to 34, wherein the digital modeling module is specifically configured to: obtain a map of the traffic road; obtain a model corresponding to each target; and map the model corresponding to each target to the map of the traffic road based on the running track of each target on the traffic road, to obtain the digital view of the traffic road.

36. A display device, wherein the display device comprises a receiving module and a display module, wherein the display module is configured to present, to a user, a digital view of the traffic road from a first view angle, wherein the digital view comprises a plurality of models, each model represents each target on the traffic road, each model runs based on a running track of a target that corresponds to the model and that is on the traffic road, and a running track of each target on the traffic road is obtained through calculation based on video data shot by a camera on the traffic road;
the receiving module is configured to receive view angle adjustment information sent by the user, wherein the view angle adjustment information is used to request to observe the digital view from a second view angle; and
the display module is further configured to present, to the user based on the view angle adjustment information, the digital view from the second view angle.

37. A computing device, wherein the computing device comprises a processor and a memory, the memory stores a computer instruction, and the processor executes the computer instruction, to enable the computing device to perform the method according to any one of claims 1 to 10.

38. A computer-readable storage medium, wherein the computer-readable storage medium stores computer program code, and when the computer program code is executed by a computing device, the computing device performs the method according to any one of claims 1 to 17.

39. A system, comprising the display device according to claim 36 and the computing device according to claim 37.
